# EUROPEAN PATENT SPECIFICATION

(11) **EP 2 296 355 B1**
(45) Date of publication and mention of the grant of the patent: **10.12.2014**
(21) Application number: 10009278.2
(22) Date of filing: 07.09.2010
(51) Int. Cl.: H04M 1/02, H02J 7/35

(54) **Foldable mobile terminal having solar cells**
Klappbares mobiles Endgerät mit Solarzellen
Terminal mobile pliable comportant des cellules solaires

(30) Priority: 11.09.2009 KR 20090086104
(43) Date of publication of application: 16.03.2011
(73) Proprietor: LG ELECTRONICS INC., Yeongdeungpo-gu Seoul 150-721 (KR)
(72) Inventor: Won, Changbai, Suwon, Gyeonggi-do (KR); Cho, Jaewoo, Gwangmyeong Gyeonggi-Do (KR); Hwang, Yongjin, Seoul (KR); Lee, Jaewook, Gwangmyeong Gyeonggi-Do (KR)
(74) Representative: Ter Meer Steinmeister & Partner

(56) References cited:
- WO-A1-2008/149658
- FR-A1- 2 878 682
- US-A1- 2008 268 916
- US-B1- 6 466 202

## Description

### BACKGROUND OF THE INVENTION

### 1. Field of the Invention

The present invention relates to a mobile terminal having a solar cell.

### 2. Background of the Invention

Mobile devices are electronic devices which are portable and have at least one of voice and telephone call functions, information input and/or output functions, a data storage function and the like.

As it becomes multifunctional, the mobile device can be allowed to capture still images or moving images, play music or video files, play games, receive broadcast and the like, so as to be implemented as an integrated multimedia player.

Various attempts have been done for the multimedia device by hardware or software in order to implement such complicated functions. For example, a user interface environment is provided in order for users to easily and conveniently retrieve or select functions.

Conventionally, a power source to supply power to the mobile terminal has been a battery which is rechargeable via a home power source or the like. Consequently, when the battery is completely discharged, a burden to be in a home or office for charging is caused. As a recognition of pollution-free energy is raised, many attempts to mount a pollution-free power supply unit, such as a solar cell, to the mobile terminal are widely ongoing.

The solar cell generates electric energy in proportion to its size, so it may be difficult to be applied to a small mobile terminal.

US 6,466,202 B1 relates to a portable information terminal unit comprising a first and a second casing, a hinge means for coupling the first and second casing so that the first and second casing are rotatable relative to each other, an opening piercing though the first casing, a first see-through liquid crystal display part fitted in the opening, a means for detecting opening of the first and second casing, relative to each other, and a control means for reversing a display on the first see-through liquid crystal display part in response to a detection by the detecting means, wherein monochromatic information is displayed on the first see-through liquid crystal display part so as to reduce power consumption.

FR 2 878 682 A1 relates to a mobile phone having solar cells as electrical power supply.

WO 2008/149658 A1 relates to a communication device charged by solar energy formed by a foldable mobile phone by pivotably connecting a first pivot provided on one end of a host to a display. One end face of the display is provided with a second pivot. A solar plate is pivotably connected to the second pivot of the display to foldably cover on the display. With the above structure, if the electricity of the battery of the mobile phone is insufficient, the user can unfold the solar plate from the display to charge the electrically-connected battery of the mobile phone, thereby to overcome the inconvenience in supplementing the electricity of the battery.

### SUMMARY OF THE INVENTION

Therefore, an object of the present invention is to provide a mobile terminal having solar cells, capable of allowing the solar cells to occupy a larger surface without lowering usability of the mobile terminal.

To achieve these and other advantages and in accordance with the purpose of the present invention, as embodied and broadly described herein, there is provided a mobile terminal including a terminal main body having a touch screen; and a flip cover foldably coupled to the terminal main body so as to have a closed state and an open state, and having a front surface and a rear surface, wherein the flip cover includes first and second solar cells disposed on the front surface and the rear surface respectively, wherein the flip cover comprises a display window configured to allow one region of the touch screen to be viewable in the closed state.

In accordance with one aspect of the present invention, the first solar cell may be formed on a first substrate and the second solar cell may be formed on a second substrate disposed in parallel to the first substrate.

In accordance with another aspect of the present invention, the first and second solar cells may be attached onto one surface of one substrate and the opposite surface thereto.

In accordance with another aspect of the present invention, the first and second solar cells may be integrally formed.

In accordance with another aspect of the present invention, the first and second solar cells may be connected to each other by being curved and extending from one end portion of the flip cover.

In accordance with another aspect of the present invention, the display window may be formed through the flip cover.

In accordance with another aspect of the present invention, the display window may further include a transparent panel.

In accordance with another aspect of the present invention, the flip cover may include a stopper for urging the terminal main body held at a preset angle with respect to a horizontal surface.

In accordance with another aspect of the present invention, the flip cover may have a size as large as being capable of obscuring the touch screen in the closed state.

In accordance with another aspect of the present invention, the mobile terminal may further include a receiver at one side of the flip cover.

In accordance with another aspect of the present invention, the flip cover may further include a housing formed to cover the first and second solar cells.

In accordance with another aspect of the present invention, the touch screen may be configured to output a charged state by the first and second solar cells.

In accordance with an embodiment of the present invention, a mobile terminal includes a terminal main body having a touch screen, and a flip cover foldably coupled to the terminal main body configured to have a closed state and an open state, the flip cover including a first solar cell disposed on a front surface, a second solar cell disposed on a rear surface, and a display window, where the display window allows one region of the touch screen to be viewable in the closed state.

In accordance with another embodiment of the present invention, a mobile terminal includes a terminal main body having a touch screen, and a flip cover foldably coupled to the terminal main body configured to have a closed state and an open state, the flip cover which includes a first solar cell disposed on a front surface, a second solar cell disposed on a rear surface, a display window formed through the flip cover configured to allow one region of the touch screen to be viewable in the closed state, a housing to configured to cover the first solar cell and the second solar cell, a stopper configured to control the terminal main body to be held at a preset angle with respect to a horizontal surface, and a receiver at one side of the flip cover.

The foregoing and other objects, features, aspects and advantages of the mobile terminal according to present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a block diagram of a mobile (portable) terminal in accordance with one embodiment of the present invention;

FIG. 2 is a front perspective view showing a closed configuration of a mobile terminal in accordance with the present invention;

FIG. 3 is a front perspective view showing an open configuration of the mobile terminal of FIG. 2;

FIG. 4 is a perspective view showing another form of the mobile terminal in accordance with the present invention;

FIGS. 5A and 5B are front views showing an operational state according to the present invention, wherein FIG. 5A shows a closed state of a flip cover, and FIG. 5B shows an open state of the flip cover;

FIG. 6A is a view showing an operational state that a touch screen is viewable through a display window according to the present invention in the closed state of the flip cover;

FIG. 6B is a view showing an operational state that numbers are output on the touch screen for dialing in the closed state of the flip cover;

FIG. 6C is a view showing an operational state in one mode of the mobile terminal whose flip cover is open;

FIG. 7 is a sectional view of the flip cover according to the present invention; and

FIG. 8 is a sectional view showing another embodiment of the flip cover in accordance with the present invention.

### DETAILED DESCRIPTION OF THE INVENTION

Description will now be given in detail of preferred configurations of mobile devices according to the present invention, with reference to the accompanying drawings. Hereinafter, suffixes "module" and "unit or portion" for components used herein in description are merely provided only for facilitation of preparing this specification, and thus they are not granted a specific meaning or function. Hence, it should be noticed that "module" and "unit or portion" can be used together.

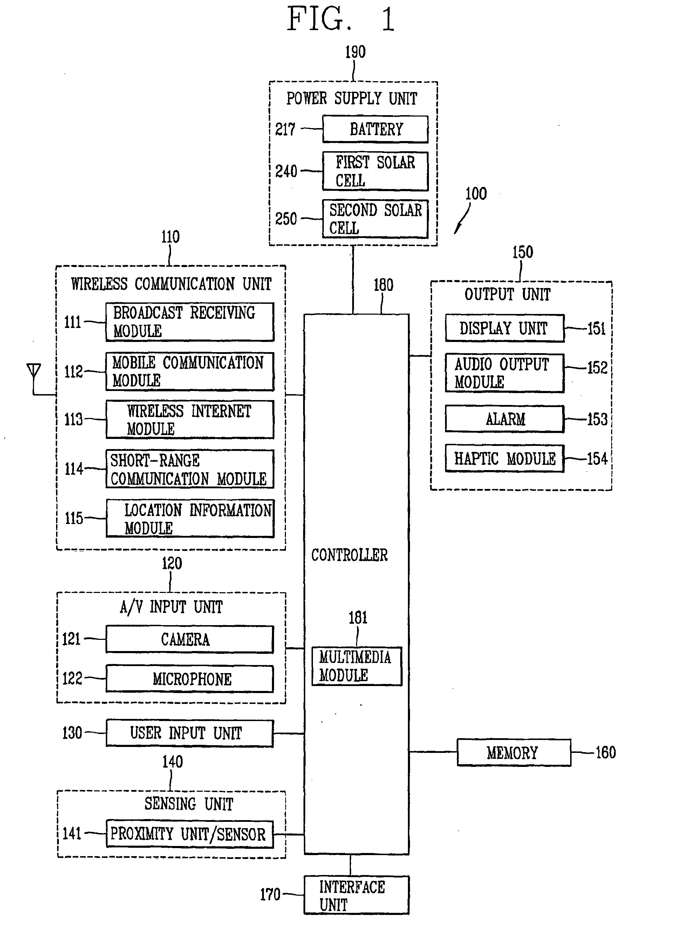

FIG. 1 is a block diagram of a mobile (portable) terminal in accordance with one embodiment of the present invention.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like:

FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position location module 115 and the like.

The broadcast receiving module 111 receives a broadcast signal and/or broadcast associated information from an external broadcast managing entity via a broadcast channel. The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The wireless internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position location module 115 denotes a module for detecting or calculating a position of a mobile terminal. An example of the position location module 115 may include a Global Position System (GPS) module. The GPS module may receive position information in cooperation with associated multiple satellites. Here, the position information may include coordinates information represented by latitude and longitude. For example, the GPS module can measure accurate time and distance respectively from more than three satellites so as to accurately calculate a current position of the mobile terminal based on such three different distances according to a triangulation scheme. A scheme may be used to obtain time information and distance information from three satellites and correct error by one satellite. Specifically, the GPS module can further obtain three-dimensional speed information and an accurate time, as well as position on latitude, longitude and altitude, from the position information received from the satellites. Wi-Fi Positioning System and/or Hybrid Positioning System may be applied as the position location module 115.

The AN input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like. Especially, if a touch pad is layered with the display module 151 to be explained later, it is called as a touch screen.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device. Meanwhile, the sensing unit 140 may include a proximity sensor 141, which will be explained later in relation to a touch screen.

The interface unit 170 may generally be implemented to interface the mobile terminal with external devices. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port. The interface unit 170 may be configured to receive data or power from an external device to transmit it to each component inside the mobile terminal 100, or may be configured to transmit data inside the mobile terminal 100 to an external device.

Also, the interface unit 170 may serve as a path for power to be supplied from an external cradle to the mobile terminal 100 when the mobile terminal 100 is connected to the external cradle or as a path for transferring various command signals input from the cradle by a user to the mobile terminal 100. Such various command signals or power input from the cradle may operate as signals for recognizing that the mobile terminal 100 has accurately been mounted to the cradle.

The output unit 150 is configured to output an audio signal, a video signal or a tactile signal. The output unit 150 may include a display unit 151, an audio output module 152, an alarm 153 and the like.

The display unit 151 may output information processed in the mobile terminal 100. For example, when the mobile terminal is operating in a phone call mode, the display unit 151 will provide a User Interface (UI) or a Graphic User Interface (GUI) which includes information associated with the call. As another example, if the mobile terminal is in a video call mode or a capturing mode, the display unit 151 may additionally or alternatively display images captured and/or received, UI, or GUI.

Meanwhile, as aforesaid, if the display unit 151 and a touch pad are layered with each other to configure a touch screen, the display unit 151 may be used as an input device as well as an output device. The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, or the like.

Some of such displays 151 may be implemented as a transparent type or an optical transparent type through which the exterior is visible, which is referred to as 'transparent display'. A representative example of the transparent display may include a Transparent OLED (TOLED), and the like. The display unit 151 may be implemented in two or more in number according to a configured aspect of the mobile terminal 100. For instance, the mobile terminal 100 may simultaneously include an external display module (not shown) and an internal display module (not shown). The touch screen may be implemented to detect even an touch input pressure as well as a touched position and area.

A proximity sensor 141 may be arranged inside the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on.

Among others, explaining a principle as to how the high frequency oscillation type proximity sensor operates, when an object to be detected becomes close to a sensor detection surface in a state of oscillating a high frequency from an oscillatory circuit, oscillatory amplitude of the oscillatory circuit is attenuated or stopped. Such change is converted into an electrical signal to detect an existence of the object to be detected. Thus, even if any material other than metal is positioned between the high frequency oscillation type proximity touch and the object to be detected, a proximity switch may detect the object to be detected without any interruption of the material.

Even without the proximity sensor 141 mounted, if an electrostatic touch screen is provided, the proximity of a pointer can be detected based upon the change in an electric field due to the proximity of the pointer.

Therefore, if the pointer is located near the touch screen without being actually contacted with each other, the location of the pointer and the distance (gap) between the pointer and the touch screen can be detected. Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a callplacing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events, for example, in a vibration manner. Alternatively, when a key signal is input, the alarm 153 may output a vibration in response to a feedback of the key signal input, accordingly, a user can recognize the event generation via the output vibration. A signal for notifying the event generation may be output through the display unit 151 or the audio output module 152.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio output upon the touch input on the touch screen.

The memory 160 may be implemented using any type of suitable storage medium including a flash memory type, a hard disk type, a memory card type (e.g., SD or DX memory), Random Access Memory (RAM), Static Random Access Memory (SRAM), Read-Only Memory (ROM), magnetic memory, magnetic disk, optical disk, and the like. Also, the mobile terminal 100 may operate a web storage which performs the storage function of the memory 160 on the Internet.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply 190 provides power required by various components under the control of the controller 180. The provided power may be internal power, external power, or combination thereof.

The power supply 190 may include a battery 191 and first and second solar cells 240, 250 so as to generate power by itself and also allows the battery 191 to be charged with the generated electricity (power). The power charged in the battery 191 may be supplied upon running each component or circuit of the mobile terminal 100 under the control of the controller 180.

The controller 180, as will be explained later, may be configured to turn on or off a driving unit for running the first solar cell 240 or the second solar cell 250, in response to opening or closing of a flip cover 202. Also, the controller 180 may selectively run the first or second solar cell 240, 250 according to a quantity of power generated, in an open state of the flip cover 202.

Various embodiments described herein may be implemented in a computerreadable medium using, for example, software, hardware, or some combination thereof.

For a hardware implementation, the embodiments described herein may be implemented within one or more Application Specific Integrated Circuits (ASICs), Digital Signal Processors (DSPs), Digital Signal Processing Devices (DSPDs), other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

The mobile terminal according to the present invention has been described in the aspect of components according to functions. Hereinafter, description will be given in more detail of the mobile terminal according to the present invention from the perspective of its components according to an outer appearance of the mobile terminal.

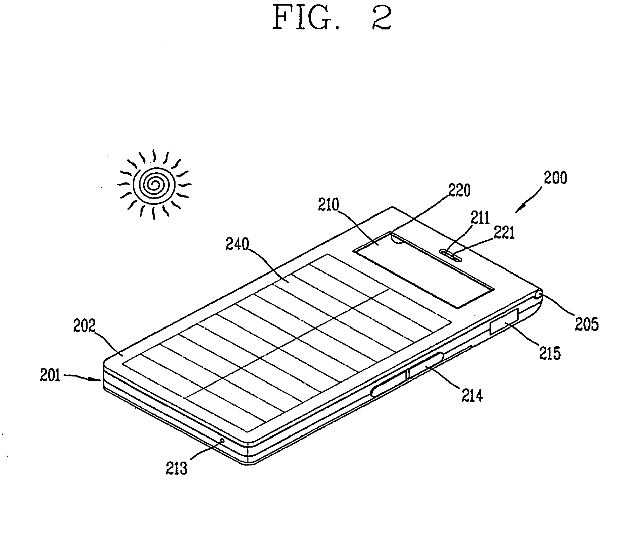

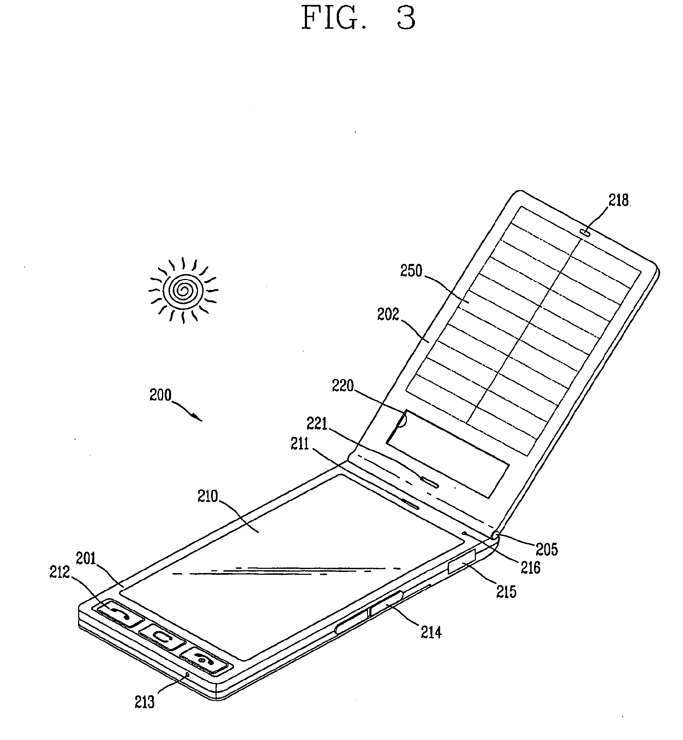

FIG. 2 is a front perspective view showing a closed configuration of a mobile terminal in accordance with the present invention, and FIG. 3 is a front perspective view showing an open configuration of the mobile terminal of FIG. 2.

Referring to FIGS. 2 and 3, a mobile terminal 200 according to the present invention may include a terminal main body 201 and a flip cover 202 foldably coupled to the terminal main body 201.

The terminal main body 201 may be provided within a case thereof with various modules or components for mobile communications or devices associated with input and output.

Referring to FIG. 3, a front surface of the terminal main body 201 is shown, having a touch screen 210, an audio output unit 211, an image input unit 216, a front key 212 and the like.

The touch screen 210 may display visible information and be implemented as an LCD module, an OLED module, an e-paper and the like. In addition, the touch screen 210 may include a touch detecting unit allowing a touch input. Accordingly, when a portion on the touch screen 210 is touched, data (information, content) corresponding to the touched portion is input. Examples of the data input in the touch manner may include characters, numbers, menu items to be instructed or designated in various modes, and the like. The touch detecting unit may be formed to be transparent such that the touch screen 210 can be viewed therethrough. The touch detecting unit may also include a structure for enhancing visibility of the touch screen 210 at a bright place. Referring to FIG. 3, the touch screen 210 may occupy most of the front surface of the terminal main body 201.

The audio output unit 211 may be implemented as a receiver which delivers a calling sound (conversation on a phone) to a user's ear or outputs various alarm sounds or reproduction sounds of multimedia.

The side surface of the terminal main body 201 is shown, having a side key 214, an interface unit 215, an audio input unit 213 and the like.

A front key 212 and the side key 214 may be referred to as a user input unit or a manipulation unit, and allow input of commands for controlling operations of the mobile terminal 200. In the aspect of the functionality, the front key 212 may be configured to input commands such as START, END, SCROLL or the like, and the side key 214 may be configured to input commands, such as controlling the image input unit 216, adjusting an audio sound output from the audio output unit 211, converting the touch screen 210 into a touch-sensitive mode or the like. The front key 212 and the side key 214 may be manipulable by a user in any tactile manner.

The audio input unit 213 may be implemented, for example, as a microphone, so as to allow input of user's voice, other sounds and the like.

The interface unit 215 may be disposed at the side surface of the terminal main body 201. The interface unit 215 may interface the mobile terminal 200 and external devices so as to allow data exchange therebetween or the like. For example, the interface unit 215 may be at least one of a wired/wireless access terminal for earphones, a short-range communication port (e.g., IrDA port, BLUETOOTH port, wireless Lan port, and the like), and power supply terminals for supplying power to the mobile terminal. The interface unit 215 may be a card socket for accommodating an external card such as Subscriber Identification Module (SIM), User Identity Module (UIM), memory card for storing information, or the like.

Referring to FIGS. 2 and 3, the flip cover 202 is connected to the terminal main body 201 via a hinge unit 205, so it can be implemented in various states. FIG. 2 shows a first state in which the flip cover 202 is completely overlaid on the terminal main body 201, which may be referred to as 'closed (folded) state,' and FIG. 3 shows a second state in which the flip cover 202 is rotated from the terminal main body 201 by a specific angle (e.g., an angle large enough to dial), which may be referred to as 'open (unfolded) state.' Here, the rotational angle of the flip cover 202 to open the same may be variously set.

The hinge unit 205 may include an elastic member which applies an elastic force to the flip cover 202 in a direction to close the flip cover 202, and also applies the elastic force to the flip cover 202 when switching the flip cover 202 from the closed state into the open state. For folding the flip cover 202 with respect to the terminal main body 201, a link element, a member made of rubber, a wrinkled neck and the like may alternatively be employed, in addition to the hinge unit 205 shown in FIG. 2 or 3.

A first solar cell 240 and a second solar cell 250 may be disposed on an outer surface of the flip cover 202 and an inner surface which is obscured. The outer surface of the flip cover 202 may be always exposed irrespective of opening or closing of the flip cover 202, so the first solar cell 240 may be configured to collect solar rays and generate power even in the closed state of the flip cover 202. On the other hand, the second solar cell 250 may be disposed to be operable in the open state of the flip cover 202.

In the open state, at least one of the first solar cell 240 and the second solar cell 250 of the flip cover 202 may be operated. If sufficient solar rays or light emitted from an artificial lamp are radiated onto both surfaces of the flip cover 202, both the first and second solar cells 240 and 250 may be operated so as to increase a charging speed.

Also, as one example, in the open state of the flip cover 202, one of the first and second solar cells 240 and 250, which is present on a surface receiving strong solar rays, is operated and another solar cell present on a surface receiving weak solar rays is restricted from being operated, thereby minimizing power consumption due to driving the undesired solar cell.

A quantity of power generated may depend on areas of the solar cells 240, 250, so the flip cover 202 may be formed with an area corresponding to the terminal main body 201 so as to maximize the areas of the solar cells 240, 250. The solar cells 240, 250 may also be disposed to occupy most of the area of the flip cover 202 for increase in the quantity of power generated.

A display window 220 for allowing a portion of the touch screen 210 to be viewable in the closed state may be formed at one side of the first solar cell 240. The display window 220 may be made of a transparent material, such as glass, plastic, etc. or be realized as a through hole. Referring to FIGS. 2 and 3, the display window 220 is exemplarily implemented as the through hole. In addition, the display window 220 may be implemented by using a separate display unit (e.g., LCD, LED, OLED, etc.).

The display window 220 may be formed to be relatively smaller than the solar cells 240, 250 which require a large area. That is, the display window 220 may be formed as small as possible in size allowing for notification of a terminal state in various modes.

As one example according to the present invention, a sound hole 221 may be formed above the first solar cell 240 so as to urge a user hear call conversation even in the closed state of the flip cover 202. Referring to FIG. 3, the sound hole 221 is present to correspond to the receiver or speaker 211 formed at the upper end of the terminal main body 201, so as to urge the user hear sounds output through the speaker 211. A speaker unit 218, as shown in FIG. 3, may separately be disposed to urge the user hear the call conversation in the open state of the flip cover 202.

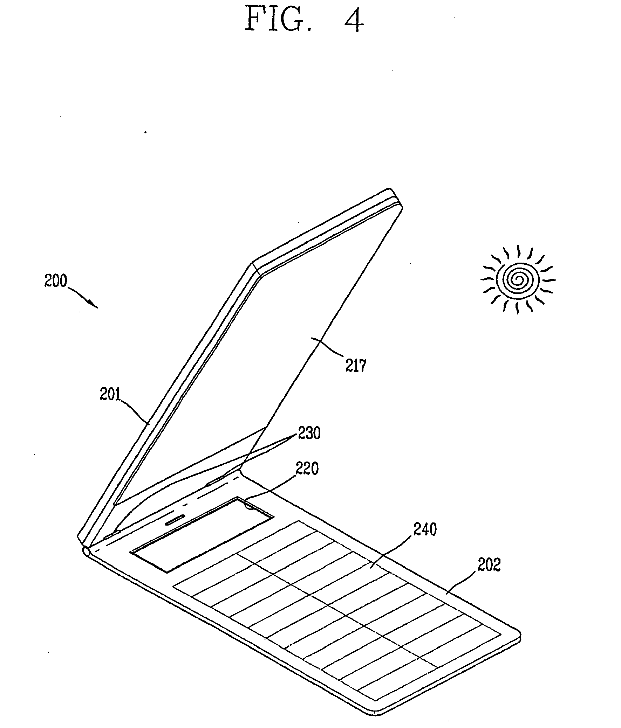

FIG. 4 is a perspective view showing another form of the mobile terminal in accordance with the present invention.

The mobile terminal 200 shown in FIG. 4 is substantially the same as the previous embodiment in that the flip cover 202 is formed at the terminal main body 201.

However, the state that the flip cover 202 is open from the terminal main body 201 is different from that illustrated in FIG. 3. That is, the flip cover 202 may serve as a 'holder' for allowing the terminal main body 201 to maintain a preset angle from the ground.

To this end, at least one portion of the terminal main body 201 or the flip cover 202 is shown, having a stopper 230 for restricting the flip cover 202 from being further rotated from the terminal main body 201. Referring to FIG. 4, the stopper 230 may be formed to be protruded to the exterior of the terminal main body 201. Alternatively, a stopper device may also be disposed within the hinge unit 205.

As shown in FIG. 4, when the terminal main body 201 is supported by the flip cover 202 to be stood at a specific angle, the inner surface of the flip cover 202 faces the exterior. Accordingly, the operation of the second solar cell 250 can be prevented, so only the first solar cell 240 can be operated to generate power.

The electric energy generated by the first solar cell 240 is stored in the battery 217 mounted to the rear surface of the terminal main body 201. The battery 217 may be mounted internally or externally.

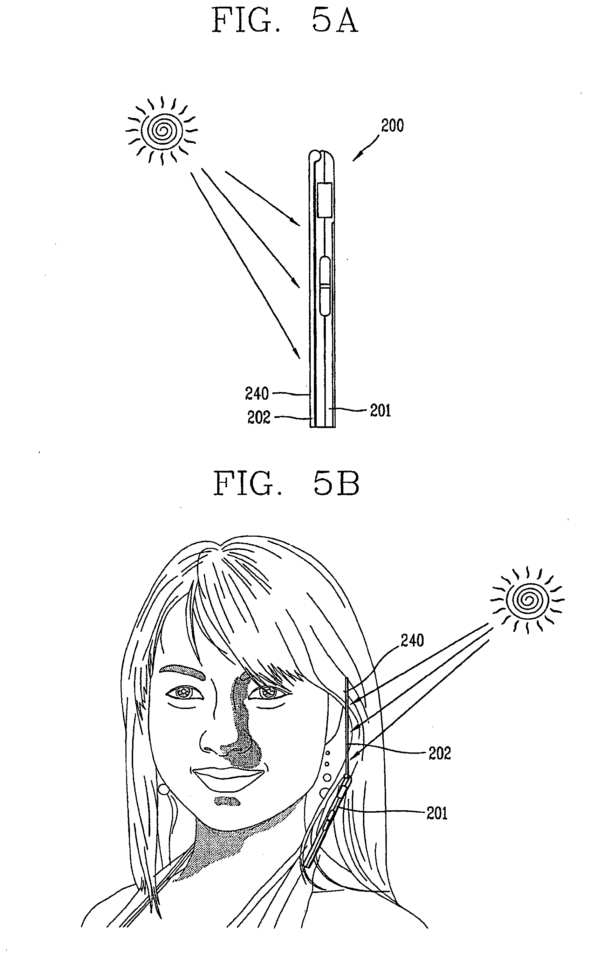

FIG. 5A shows a closed state of the flip cover, and FIG. 5B shows an open state of the flip cover.

As shown in FIGS. 5A and 5B, the mobile terminal can be configured to generate power using solar rays in both the closed and open states of the flip cover 202 by virtue of the first solar cell 240 and the second solar cell 250 disposed on both surfaces of the flip cover 202. That is, referring to FIG. 5A, in the closed state of the flip cover 202, the first solar cell 240 is allowed to be oriented toward solar rays, thereby enabling a power generation and a charging operation. Also, the mobile terminal according to the present invention may be configured to allow the power generation and the charging operation even while making a call by opening the flip cover 202. Referring to FIG. 5B, since the inner surface of the flip cover 202 is obstructed by a user's face during a call communication, the second solar cell 250 may be prevented from being used, whereas the first solar cell 240 may still be exposed so as to generate and charge power with solar rays even during the call communication.

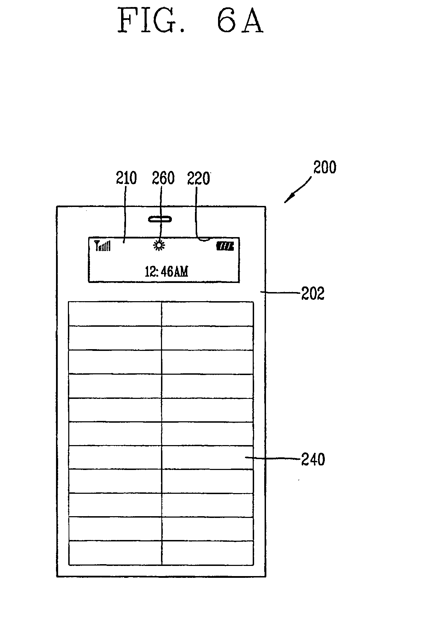

FIG. 6A is a view showing an operational state that a touch screen is viewable through a display window according to the present invention in the closed state of the flip cover.

The mobile terminal 200 may be set to block power supply to the touch screen 210 when a specific event is not generated. If the touch screen 210 is in a wake-up state, as shown in FIG. 6A, an icon or graphic 260 which visibly indicates a power generation state by the first solar cell 240 may be output on the touch screen 210 viewable through the display window 220. The icon or graphic 260 may be configured in various forms, such as figure, color or flickering pattern, to correspond to the strength of a current generated by the first solar cell 240.

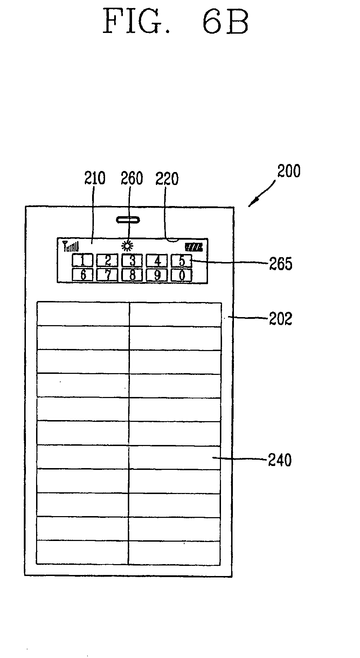

FIG. 6B is a view showing an operational state that numbers are output on the touch screen for dialing in the closed state of the flip cover.

Referring to FIG. 6B, even in the closed state of the flip cover 202, numbers 265 which are touch-inputtable are output on the touch screen 210 for dialing. A user can simply enter a callee's phone number in the touching manner to place a call. During this process, the first solar cell 240 is still operated, and the situation is output by use of the graphic or icon 260.

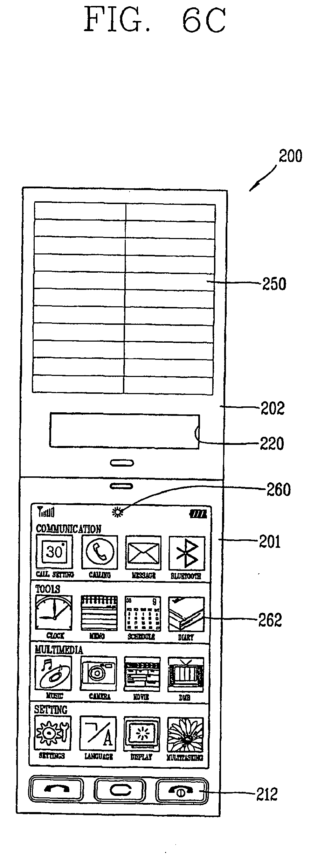

FIG. 6C is a view showing an operational state in one mode of the mobile terminal whose flip cover 202 is open. Referring to FIG. 6C, a menu list 262 including various inputtable menus and the like are output on the touch screen 210, and the operation or non-operation of the solar cells 240, 250 according to the present invention and the power generation state thereof may be output on one side of the menu list 262 in the form of the icon or graphic 260.

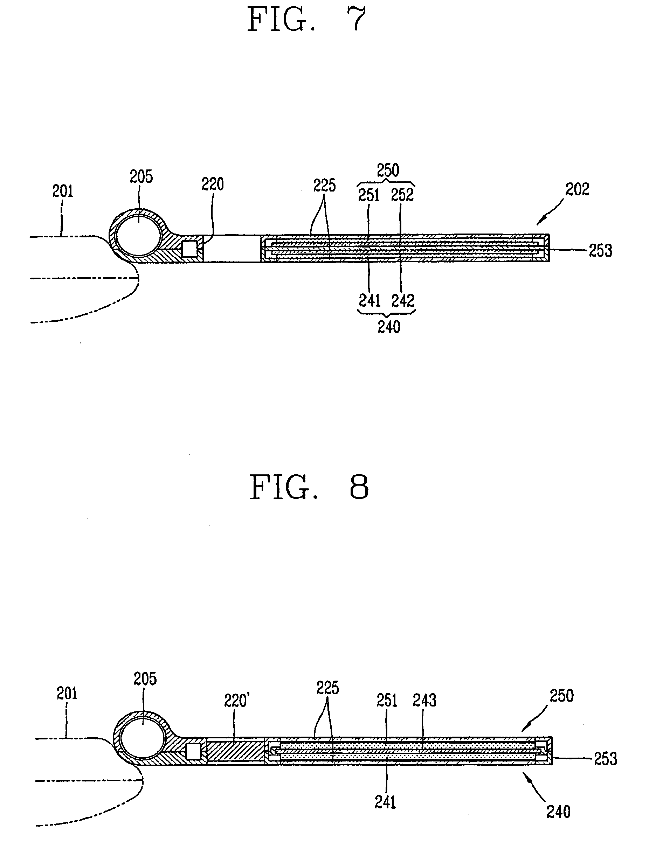

FIG. 7 is a sectional view of the flip cover according to the present invention.

Referring to FIG. 7, the flip cover 202 may include a housing 253 having a protection film 225 formed on each of the outer and inner surfaces of the flip cover 202 for protecting the solar cells 240, 250. The first solar cell 240 and the second solar cell 250 may be disposed in parallel at one side and another side of the housing 253. The housing 253 may be formed to be rigid or flexible.

Referring to FIG. 7, each of the first and second solar cells 240 and 250 may include a substrate 242, 252 and a cell portion 241, 251. The substrate 242 of the first solar cell 240 and the substrate 252 of the second solar cell 250 are separated by the housing 253, but rather they may have a sufficiently strong structure by virtue of the rigidity of the housing 253 interposed therebetween. The substrate 242 of the first solar cell 240 and the substrate 252 of the second solar cell 250 may be fabricated in a form of a flexible film. The substrates 242, 252 of the first and second solar cells 240 and 250 may also be integrally connected to each other by being bent at one side of the housing 253, thereby being generally configured in a form of a folded substrate. Alternatively, the first solar cell 240 and the second solar cell 250 may be connected in series.

FIG. 8 is a sectional view showing another embodiment of the flip cover in accordance with the present invention.

As shown in FIG. 8, the cell portions 241, 251 configuring the first and second solar cells 240, 250 may be attached respectively onto an outer surface and an inner surface of one substrate 243. That is, unlike the structure of FIG. 7 using two separate substrates 242, 252, this embodiment may implement the first solar cell 240 and the second solar cell 250 using the one substrate 243. This configuration can decrease the thickness of the substrate 243 and the housing, so it may be advantageous for making the flip cover 202 slimmer.

Also, referring to FIG. 8, a display window 220' is configured in the form of a transparent panel made of glass or plastic, for example.

As described above, with the structure of the mobile terminal according to the present invention, a flip cover, which is open and closed and has solar cells overall mounted thereon, may be coupled, to a bar-type mobile terminal having a touch screen, and provided with a display window, thereby allowing a power generation and a charging operation at any time if there are solar rays irrespective of opening or closing of the flip cover, and enabling execution of an operation via the display window without opening the flip cover.

According to one embodiment of the present invention, the flip cover can be configured slimmer by employing a thin film type solar cell, and also be applied as an additional usage, such as a holder.

The configurations and methods of the mobile terminal in the aforesaid embodiments may not be limitedly applied, but such embodiments may be configured by a selective combination of all or part of each embodiment so as to derive many variations.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a terminal main body (201) having a touch screen (210); and
a flip cover (202) foldably coupled to the terminal main body and configured to have a closed state and an open state, the flip cover including a display window (220),
wherein the display window (220) is configured to allow one region of the touch screen to be viewable in the closed state,
**characterized in that** the flip cover (202) includes a first solar cell (240) disposed on a front surface of the flip cover, and a second solar cell (250) disposed on a rear surface of the flip cover,
wherein the first and second solar cells (240, 250) are integrally formed, and
wherein the first and second solar cells (240, 250) are connected to each other by being curved and extended from one end portion of the flip cover.

2. The terminal of claim 1, further comprising:
a housing (253) configured to cover the first solar cell (240) and the second solar cell (250) and to separate a first substrate (242) from a second substrate (252), wherein the first solar cell is formed on the first substrate (242) and the second solar cell is formed on the second substrate (252) disposed in parallel to the first substrate (242).

3. The terminal of claims 1 or 2, wherein the first and second solar cells (240, 250) are attached onto one surface of one substrate and the opposite surface of another substrate respectively.

4. The terminal of any one of claims 1 to 3, wherein the display window (220) is formed through the flip cover (202).

5. The terminal of claim 4, wherein the display window (220) further comprises a transparent panel (220').

6. The terminal of any one of claims 1 to 5, wherein the flip cover (202) further includes a stopper (230) configured to control the terminal main body to be held at a preset angle with respect to a horizontal surface.

7. The terminal of any one of claims 1 to 6, wherein a size of the flip cover (202) is as large as to protect the touch screen (210) in the closed state.

8. The terminal of any one of claims 1 to 7, further comprising a receiver (221) at one side of the flip cover (202).

9. The terminal of claim 2, wherein the housing includes a protection film (225) formed on both the front surface and the rear surface of the flip cover and configured to protect the first and the second solar cells.

10. The terminal of any one of claims 1 to 9, wherein the touch screen (210) is configured to output a charged state (260) by the first and second solar cells.

## Patentansprüche

1. Mobiles Endgerät, das umfasst:
einen Endgeräthauptkörper (201) mit einem Berührungsbildschirm (210); und
einen Klappdeckel (202), der klappbar mit dem Endgeräthauptkörper gekoppelt ist und dafür konfiguriert ist, einen geschlossenen Zustand und einen offenen Zustand zu besitzen, wobei der Klappdeckel ein Anzeigefenster (220) enthält,
wobei das Anzeigefenster (220) dafür konfiguriert ist zu ermöglichen, dass ein Bereich des Berührungsbildschirms in dem geschlossenen Zustand sichtbar ist,
**dadurch gekennzeichnet, dass** der Klappdeckel (202) eine erste Solarzelle (240), die auf einer vorderen Oberfläche des Klappdeckels angeordnet ist, und eine zweite Solarzelle (250), die auf einer hinteren Oberfläche des Klappdeckels angeordnet ist, enthält,
wobei die erste und die zweite Solarzelle (240, 250) einteilig gebildet sind, und
wobei die erste und die zweite Solarzelle (240, 250) dadurch, dass sie gekrümmt sind und von einem Endabschnitt des Klappdeckels ausgehen, miteinander verbunden sind.

2. Endgerät nach Anspruch 1, das ferner umfasst:
ein Gehäuse (253), das dafür konfiguriert ist, die erste Solarzelle (240) und die zweite Solarzelle (250) zu bedecken und ein erstes Substrat (242) von einem zweiten Substrat (252) zu trennen, wobei die erste Solarzelle auf dem ersten Substrat (242) gebildet ist und die zweite Solarzelle auf dem parallel zu dem ersten Substrat (242) angeordneten zweiten Substrat (252) gebildet ist.

3. Endgerät nach Anspruch 1 oder 2, wobei die erste und die zweite Solarzelle (240, 250) auf einer Oberfläche eines Substrats bzw. auf der gegenüberliegenden Oberfläche eines anderen Substrats angebracht sind.

4. Endgerät nach einem der Ansprüche 1 bis 3, wobei das Anzeigefenster (220) durch den Klappdeckel (202) gebildet ist.

5. Endgerät nach Anspruch 4, wobei das Anzeigefenster (220) ferner eine durchsichtige Platte (220') umfasst.

6. Endgerät nach einem der Ansprüche 1 bis 5, wobei der Klappdeckel (202) ferner einen Anschlag (230) enthält, der dafür konfiguriert ist, den Endgeräthauptkörper so zu steuern, dass er in Bezug auf eine horizontale Oberfläche unter einem im Voraus festgelegten Winkel gehalten wird.

7. Endgerät nach einem der Ansprüche 1 bis 6, wobei eine Größe des Klappdeckels (202) so groß ist, dass der Berührungsbildschirm (210) in dem geschlossenen Zustand geschützt ist.

8. Endgerät nach einem der Ansprüche 1 bis 7, das ferner auf einer Seite des Klappdeckels (202) einen Empfänger (221) umfasst.

9. Endgerät nach Anspruch 2, wobei das Gehäuse eine Schutzschicht (225) enthält, die sowohl auf der vorderen Oberfläche als auch auf der hinteren Oberfläche des Klappdeckels gebildet ist und die dafür konfiguriert ist, die erste und die zweite Solarzelle zu schützen.

10. Endgerät nach einem der Ansprüche 1 bis 9, wobei der Berührungsbildschirm (210) dafür konfiguriert ist, einen durch die erste und durch die zweite Solarzelle geladenen Zustand (260) auszugeben.

## Revendications

1. Terminal mobile comprenant :
un corps principal de terminal (201) comportant un écran tactile (210) ; et
un volet (202) couplé de manière à pouvoir être replié au corps principal de terminal et configuré pour avoir un état fermé et un état ouvert, le volet comprenant une fenêtre d'affichage (220),
dans lequel la fenêtre d'affichage (220) est configurée pour permettre à une région de l'écran tactile de pouvoir être visualisée dans l'état fermé,
**caractérisé en ce que** le volet (202) comprend une première cellule photovoltaïque (240) disposée sur une surface avant du volet, et une deuxième cellule photovoltaïque (250) disposée sur une surface arrière du volet,
dans lequel les première et deuxième cellules photovoltaïques (240, 250) font partie intégrante l'une de l'autre, et
dans lequel les première et deuxième cellules photovoltaïques (240, 250) sont reliées l'une à l'autre en étant incurvée et étendue à partir d'une portion d'extrémité du volet.

2. Terminal selon la revendication 1, comprenant en outre :
un logement (253) configuré pour recouvrir la première cellule photovoltaïque (240) et la deuxième cellule photovoltaïque (250) et pour séparer un premier substrat (242) d'un deuxième substrat (252), dans lequel la première cellule photovoltaïque est formée sur le premier substrat (242), et la deuxième cellule photovoltaïque est formée sur le deuxième substrat (252) disposé parallèlement au premier substrat (242).

3. Terminal selon la revendication 1 ou 2, dans lequel les première et deuxième cellules photovoltaïques (240, 250) sont attachées respectivement sur une surface d'un substrat et sur la surface opposée d'un autre substrat.

4. Terminal selon l'une quelconque des revendications 1 à 3, dans lequel la fenêtre d'affichage (220) est formée à travers le volet (202).

5. Terminal selon la revendication 4, dans lequel la fenêtre d'affichage (220) comprend en outre un panneau transparent (220').

6. Terminal selon l'une quelconque des revendications 1 à 5, dans lequel le volet (202) comprend en outre une butée (230) configurée pour commander le maintien du corps principal de terminal à un angle préréglé par rapport à une surface horizontale.

7. Terminal selon l'une quelconque des revendications 1 à 6, dans lequel une taille du volet (202) est suffisamment grande pour protéger l'écran tactile (210) dans l'état fermé.

8. Terminal selon l'une quelconque des revendications 1 à 7, comprenant en outre un récepteur (221) sur un côté du volet (202).

9. Terminal selon la revendication 2, dans lequel le logement comprend un film protecteur (225) constitué à la fois sur la surface avant et la surface arrière du volet et configuré pour protéger les première et deuxième cellules photovoltaïques.

10. Terminal selon l'une quelconque des revendications 1 à 9, dans lequel l'écran tactile (210) est configuré pour délivrer un état chargé (260) par les première et deuxième cellules photovoltaïques.
